# EUROPÄISCHE PATENTSCHRIFT

(11) **EP 1 699 648 B1**
(45) Veröffentlichungstag und Bekanntmachung des Hinweises auf die Patenterteilung: **23.09.2009**
(21) Anmeldenummer: 04797256.7
(22) Anmeldetag: 19.11.2004
(51) Int. Cl.: B60H 1/00

(54) **REGELUNG DES LUFTSTROMS IN EINEM LÜFTUNGSROHR**
AIRFLOW CONTROL IN A VENTILATION PIPE
REGULATION D'UNE CIRCULATION D'AIR DANS UN CONDUIT D'AERATION

(30) Priorität: 08.12.2003 CH 20872003
(43) Veröffentlichungstag der Anmeldung: 13.09.2006
(73) Patentinhaber: Belimo Holding AG, 8340 Hinwil (CH)
(72) Erfinder: LEHNERT, Frank, CH-8630 Rüti (CH)
(74) Vertreter: Breiter, Heinz
(86) Internationale Anmeldenummer: PCT/CH2004/000699
(87) Internationale Veröffentlichungsnummer: WO 2005/053975

(56) Entgegenhaltungen:
- DE-A- 3 544 922
- DE-A- 4 401 012
- DE-C1- 10 053 291
- US-A- 5 551 667

## Beschreibung

Die Erfindung bezieht sich auf eine Vorrichtung zur Regelung des Luftstroms in einem Lüftungsrohr mit einer oder mehreren synchron betätigbaren Luftklappen, welche in Schliessstellung den Luftstrom im Rohr unterbinden.

Der Ausdruck Lüftungsrohr wird für Rohre von z.B. rundem, elliptischem quadratischem oder rechteckigem Querschnitt gebraucht, welche oft auch als Lüftungskanäle bezeichnet werden. Belüftungssysteme werden in Gebäuden, insbesondere Wohn-, Büro-, Gewerbe- und Industriebauten, in der Regel kombiniert mit Brand- und Rauchschutzeinrichtungen, und Tunnels, aber auch in der Automobilindustrie eingesetzt.

In Belüftungsanlagen spielt die Volumenstromregelung mit schwenkbaren Luftklappen eine wesentliche Rolle. Der Volumenstrom wird mit einem geeigneten Messinstrument gemessen, beispielsweise mit dem als kompakte Einheit von Antrieb, Druckfühler und Regler ausgebildeten NMV-D2M der Belimo Automation AG, CH-8340 Hinwil, welches Gerät die Anzeige des Volumenstroms in m³/h ermöglicht. Dies vereinfacht die Einregulierung und Optimierung der Lüftungsanlage erheblich und ermöglicht tiefere Betriebskosten.

Aus der DE 10053291 ist eine Absperreinrichtung für eine Lüftungsöffnung, insbesondere in einer Klimaanlage eines Kraftfahrzeuges, bekannt. Die Absperreinrichtung weist einen die Lüftungsöffnung umschliessenden Gehäuserahmen und ein zum Verschliessen und Freigeben der Lüftungsöffnung vorgesehenes Absperrorgan mit Lamellenelementen auf. Diese sind miteinander verbunden und um zueinander parallele Lamellenachsen schwenkbar. Eines der Lamellenelemente kann mit einem Antriebsmotor versehen sein. Durch die Integration des Antriebsmotors in ein Lamellenelement werden die Abmessungen der Absperreinrichtungen nicht beeinflusst Die Lamellenachsen, in den gezeigten Beispielen drei, sind entlang von zugeordneten Führungen an den Seitenteilen beweglich geführt. Eine synchrone Lamellenbewegung ist durch stirnseitige Scharnierelemente oder durch gemeinsame, schubstangenartige Verbindungselemente gewährleistet.

Der vorliegenden Erfindung liegt die Aufgabe zugrunde, eine Vorrichtung der eingangs genannten Art zu schaffen, welche für unterschiedlich grosse Rohrquerschnitte aller Querschnittsformen einsetzbar ist.

Die Aufgabe wird erfindungsgemäss dadurch gelöst, dass im Lüftungsrohr, auf einer längslaufenden Symmetrieebene, ein Befestigungssteg mit einem Drehlager für die Antriebsachse der Luftklappe/n und Mitteln für die Kraft- und/oder Drehmomentübertragung auf die mit der/den Luftklappe/n verbundene Antriebsachse angeordnet ist, wobei der gleiche, mit verschiedenen Luftklappen bestückbare Befestigungssteg für querschnittlich verschieden dimensionierte Lüftungsrohre einsetzbar ist. Spezielle und weiterbildende Ausführungsformen der Vorrichtung sind Gegenstand von abhängigen Patentansprüchen.

Für im Querschnitt runde Lüftungsrohre ist im allgemeinen eine Luftklappe bevorzugt, welche in Schliesslage den ganzen Querschnitt abdeckt. Die geometrische Grundform der Luftklappe hängt von deren Position in der Schliessstellung ab. Liegt die Klappe in Schliesslage senkrecht zur Längsachse bzw. Längsmittelebene des Lüftungsrohrs, ist die Luftklappe immer kreisrund ausgebildet. Bei einem kleineren Winkel α der Luftklappe gegenüber der Längsachse des Lüftungsrohrs ist die Grundform der Luftklappe elliptisch. Je kleiner der Winkel α in Schliessstellung ist, desto grösser ist das Verhältnis der grossen zur kleinen Achse der Ellipse.

Insbesondere bei Lüftungsrohren rechteckigen Querschnitts kann es zweckmässig sein, mehr als eine Luftklappe auszubilden, insbesondere drei oder fünf. Die synchrone Betätigung wird mit an sich bekannten Mitteln gewährleistet, bei einem Antrieb der mittleren Luftklappe durch gelenkiges Verbinden der Klappenenden über Zahnräder oder eine Verbindungsstange bei separaten Antrieben der Luftklappen durch synchrone Ansteuerung der Antriebe.

In der Praxis ist der Befestigungssteg zweckmässig in der vertikalen Symmetrieebene eines Lüftungsrohrs angeordnet. Vorzugsweise ist der Befestigungssteg einends lösbar und in der Symmetrieebene schwenkbar an der Rohrwandung verankert. Der Schwenkbereich eines kurz ausgebildeten Befestigungsstegs beträgt 0 bis 180°, er kann in jedem Winkel β der Längsachse bzw. zur Rohrwandung fixiert werden. Der Befestigungssteg ist wenigstens so lang ausgebildet, dass das Drehlager für die Antriebsachse der Luftklappen bei einem Winkel β von 90° auf oder unterhalb der Längsachse L bzw. der halben Höhe des Lüftungsrohrs liegt. Je kleiner die Querschnitts-Rohrdimensionen, desto kleiner wird der Winkel β. Die geometrischen Verhältnisse müssen zwangsläufig so ausgebildet sein, dass das erwähnte Drehlager für die Antriebsachse stets auf der Längsachse eines runden oder auf halber Höhe der Längsmittelebene eines rechteckigen Rohrs liegt.

Zweckmässig ist der Befestigungssteg gleich lang oder länger ausgebildet als die betreffende Innendimension des Rohrquerschnitts. Zwangsläufig muss auch nach dieser Variante die Achse des Drehlagers für die Antriebsachse der Luftklappen so ausgebildet sein, dass sie bei jedem Winkel β des Befestigungsstegs auf der Längsachse oder auf halber Höhe der Längsmittelebene L liegt. Dieser Winkel β kann daher aus praktischen Gründen nicht beliebig klein sein, der bevorzugte Bereich liegt zwischen 15 und 90° bezüglich der Längsachse bzw. Längsmittelebene des Belüftungsrohrs.

Bei in der Vertikalebene schwenkbaren Befestigungsstegen liegt ein länger als die entsprechende Rohrdimension ausgebildeter Befestigungssteg frei schwenkbar auf der unteren Rohrwandung auf. Bei einem Lüftungsrohr mit rundem Querschnitt ergibt sich wegen des Krümmungsradius' eine gewisse seitliche Führung, insbesondere bei einem kleinen Rohrdurchmesser. Bei allen Rohrdurchmessern und insbesondere bei im Querschnitt rechteckigen Lüftungsrohren kann eine Nut ausgebildet sein, welche eine seitliche Stabilisierung gewährleistet. Dieses freie Ende kann auch lösbar befestigt sein, beispielsweise durch Verschrauben.

Nach einer besonders vorteilhaften Ausbildungsform der Erfindung ist der Stellantrieb im Befestigungssteg angeordnet, wobei er das Drehmoment auf die Antriebsachse für die Luftklappe direkt oder via mechanische Obertragungsmittel überträgt. Auch die Elektronik wird zweckmässig wenigstens teilweise im Befestigungssteg angeordnet.

Der Befestigungssteg ist zur Vermeidung eines nennenswerten Druckabfalls im Lüftungsrohr und der Bildung von unerwünschten Turbulenzen möglichst stromlinienförmig ausgebildet. Er ist deshalb wenigstens in Stromaufrichtung abgerundet oder prismatisch mit abgerundeten Kanten ausgebildet.

Die Vorteile der vorliegenden Erfindung können wie folgt zusammengefasst werden:
- Der gleiche Befestigungssteg kann für verschiedene Rohrdimensionen verwendet werden, die Kosten für Handling und Lager sind verglichen mit bekannten Vorrichtungen minimal.
- Die Montagearbeiten können auf eine Schraube reduziert werden, welche auch Kabeldurchführung sein kann.
- Die Luftklappe/n wird/werden direkt auf die Antriebswelle montiert.
- Die Blätter der Luftklappe/n können zur Lagerung, Transport und Montage umgelegt werden.
- Es ist ein nachträglicher Einbau in ein Lüftungsrohr möglich.
- Bei genügend Bauraum ausserhalb des Lüftungsrohrs kann der Stellantrieb auch ausserhalb des Lüftungsrohrs liegen.
- Der Luftwiderstand kann verglichen mit konventionellen Vorrichtungen etwa gleich niedrig gehalten werden.
- Bei bestimmten Ausführungsformen kann der Befestigungssteg zur Rohrinspektion oder Rohrreinigung hochgeklappt werden.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine perspektivische Ansicht eines Abschnitts eines Lüftungsrohrs mit einer Regelung des Luftstroms,
- Fig. 2 einen geöffneten Befestigungssteg von der Seite,
- Fig. 3-6 perspektivische Ansichten von Luftklappen,
- Fig. 7, 8 Abschnitte von Lüftungsrohren unterschiedlichen Durchmessers mit einem frei schwenkbaren kurzem Befestigungssteg,
- Fig. 9 einen Abschnitt eines Lüftungsrohrs mit langem Befestigungssteg und einer kreisförmigen Luftklappe,
- Fig. 10 eine Variante von Fig. 9 mit elliptischer Luftklappe,
- Fig. 11 eine Variante von Fig. 10 mit hochgeklapptem Befestigungssteg,
- Fig. 12 einen Querschnitt XII- XII durch Fig. 11 bei ovaler Ausbildung,
- Fig. 13 eine Variante von Fig. 12,
- Fig. 14 einen Querschnitt XII - XII durch Fig. 11 bei rechteckiger Ausbildung, und
- Fig. 15 eine Seitenansicht eines Befestigungsstegs mit zum Transport umgelegten Blättern der Luftklappe.

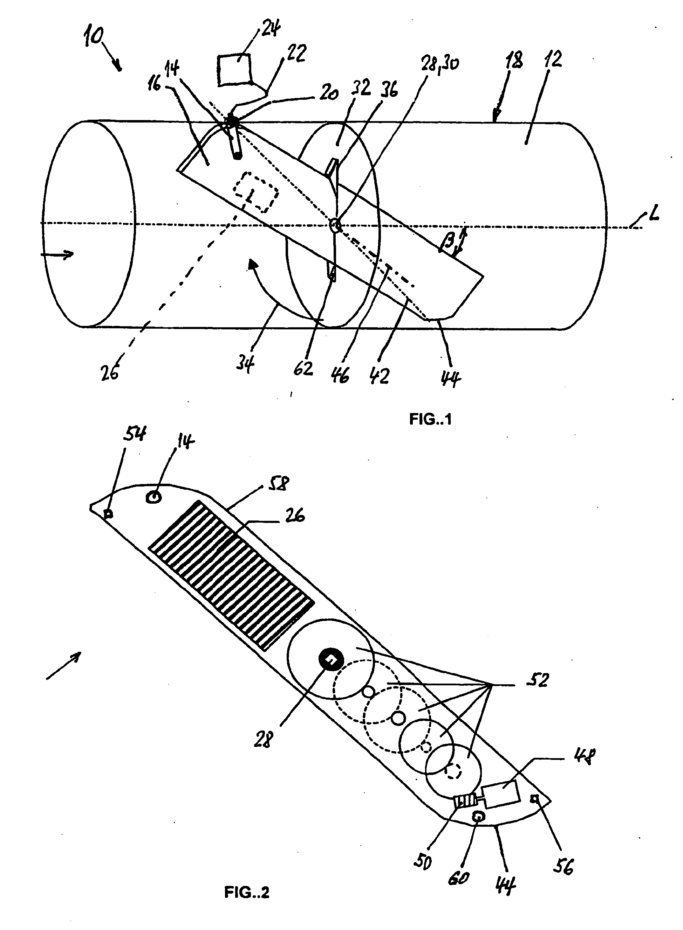

Fig. 1 zeigt eine Vorrichtung 10 zur Regelung des Luftstroms A in einem Lüftungsrohr 12 aus Metall oder Kunststoff. Der Übersichtlichkeit wegen ist dieses im Querschnitt kreisförmige Lüftungsrohr 10 mit einer Längsachse L transparent gezeichnet.

In der Vertikalebene durch die Längsachse L ist ein um eine Befestigungsachse 14 drehbar gelagerter Befestigungssteg 16 angeordnet. Die Befestigungsachse 14 ihrerseits durchgreift eine Halterung 20, welche in der Rohrwandung 18 mittels einer Schraube an deren oberem Scheitel befestigt ist. Ein elektrisches Kabel 22 führt von einem nur rudimentär dargestellten Monitor 24 in das Innere des Befestigungsstegs 16, welcher die nicht im Monitor 24 angeordnete Elektronik 26 enthält. Anstelle des Monitors 24 kann auch eine LED - Lampe zur Anzeige der Klappenstellung angeordnet sein.

Exakt auf dem Niveau der Längsachse L ist eine Antriebsachse 28 bzw. eine Antriebswelle in einem Drehlager 30 des Befestigungsstegs 16 angeordnet. Die Antriebsachse 28 ist zweckmässig auf beiden Stirnseiten bis zur Rohrwandung 18 verlängert und erfüllt eine seitliche Stützfunktion. Die Antriebsachse 28 und eine Luftklappe 32 sind starr miteinander verbunden. Auf die Antriebsachse 28 wird von einem nicht dargestellten Stellantrieb ein Drehmoment in Richtung des Pfeils 34 ausgeübt, bis die Luftklappe 32 die vorgegebene Position erreicht hat. Gemäss Fig. 1 ist offen gelassen, ob das Drehmoment durch einen Stellantrieb im Innern des Lüftungsrohrs 12 oder ausserhalb davon ausgeübt wird. Im zweiten Fall durchgreift die Antriebsachse 28 die Rohrwandung 18 und ist darin drehbar. Der Stellantrieb ist derart gestaltet, dass er auch bei einem starken Luftstrom A die Luftklappe 32 in der vorgegebenen Position halten kann.

Vorliegend ist die Luftklappe 32 mit zwei diagonal gegenüberliegenden Abdichthauben 36 ausgerüstet. Sobald der in der Luftklappe 32 ausgebildete Spalt 62 den Bereich des Befestigungsstegs verlässt und freien Durchtritt für den Luftstrom A gewähren würde, wird die Lücke durch die beiden mit wenig Spiel anliegenden Abdichthauben 36 abgedeckt.

Der Befestigungssteg 16 liegt frei auf dem inneren unteren Scheitel der Rohrwandung 18 auf. Die Auflage und die Befestigungsachse 14 bilden eine Ebene 42, welche von der Längsachse L im Bereich der Antriebsachse 28 durchstossen wird. Wäre dies nicht der Fall, könnte die Luftklappe 32 nicht in eine Schliessposition gedreht werden.

Die Auflagefläche 44 des Befestigungsstegs 16 muss so berechnet sein, dass die Antriebsachse 28 in jedem Winkel β, welcher vom Durchmesser des Lüftungsrohrs 12 abhängig ist, exakt auf der Längsachse L liegt, sonst wäre kein exaktes Drehen der Luftklappe 32 um die Antriebsachse 28, dreidimensional dargestellt durch die strichpunktierte Linie 46, möglich.

In Fig. 2 ist das Innere des Befestigungsstegs 16 gezeigt. Von der Elektronik 26 angesteuert, wird der Stellantrieb 48, vorliegend ein Elektromotor, in Rotation versetzt. Über eine Antriebsschnecke 50 werden die weiteren mechanischen Übertragungsmittel 52, ein stark untersetztes Zahnradgetriebe, in Rotation versetzt. Derart kann die Antriebsachse 28 für die in Fig. 2 nicht dargestellte Luftklappe sehr präzis positioniert und wirkungsvoll in dieser Position gehalten wer den. Die Verbindungsdrähte bzw. -kabel zu und von der Elektronik 26 sind einfachheitshalber nicht gezeichnet.

An beiden Stirnseiten des Befestigungsstegs 16 ist je eine Messzelle 54, 56 zur Differenzdruckmessung p₁, p₂ im Lüftungsrohr 12 (Fig. 1) angeordnet. Die Konturen 58 des Befestigungsstegs 16 sind strömungstechnisch optimalisiert, der Luftwiderstand ist trotz der vielgestaltigen Ausgestaltung des Innenraums sehr klein.

Bei Bedarf kann auch die untere Stirnseite, die Auflagefläche 44, an der unteren inneren Rohrwandung 18 (Fig. 1) befestigt werden, beispielsweise über eine Bohrung 60.

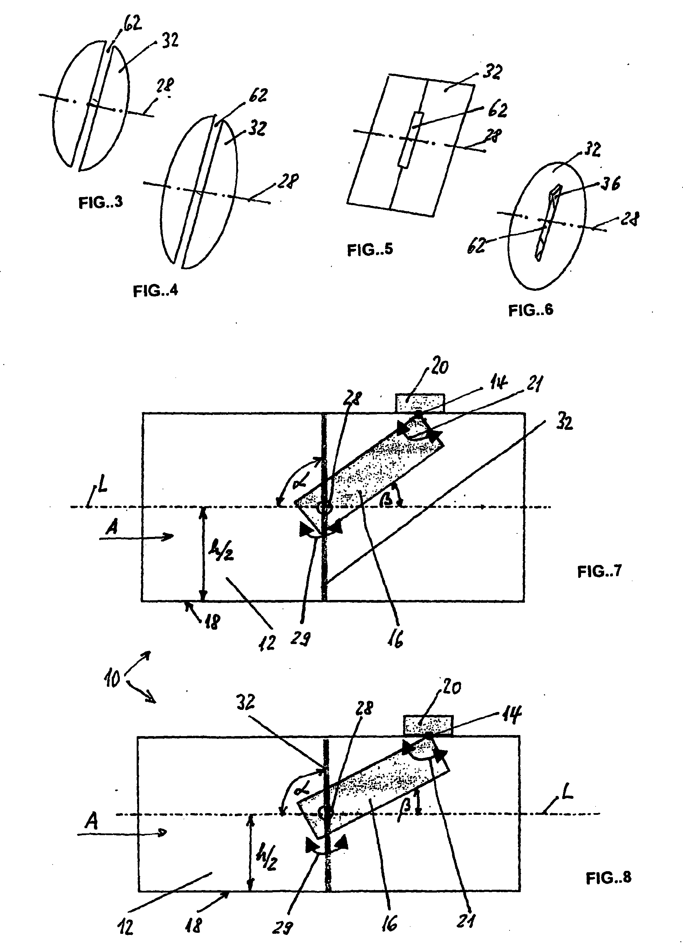

Fig. 3 zeigt eine Luftklappe 32, mit im wesentlichen kreisförmiger Blattform welche einen diagonalen Spalt 62 für die Aufnahme des Befestigungsstegs 16 (Fig.1, 2) hat. Die beiden Hälften der Luftklappe 32 sind an der angedeuteten Antriebsachse 28 befestigt. Die Luftklappe 32 kann im Lüftungsrohr 12 gegenüber der Längsachse L einen Winkel α von 0 bis 90° einnehmen. (Fig. 7).

Fig. 4 zeigt eine elliptisch ausgebildete Luftklappe 32, welche im übrigen der Ausführungsform von Fig. 3 entspricht. Der erwähnte Winkel α kann z. B. lediglich Werte zwischen 0 und 60° annehmen, dann liegt der Umfang der Luftklappe 32 auf der Innenfläche des Lüftungsrohrs 12 auf. Bei anderen Verhältnissen der Länge zur Breite der Ellipse ändert der Winkel α entsprechend.

Die ebenfalls zweiteilig ausgebildete Luftklappe 32 gemäss Fig. 5 ist für ein im Querschnitt rechtwinkliges Lüftungsrohr 12 bestimmt. Der Spalt 62 ist nicht durchgehend, dadurch ist der Winkel α nach unten beschränkt.

Die lediglich leicht elliptische Luftklappe 32 gemäss Fig. 6 ist einstückig ausgebildet, es ist ein nicht durchgehender Spalt 62 auf dem längeren, senkrecht zur Antriebsachse 28 verlaufenden Durchmesser ausgebildet. An beiden stimseitigen Enden des Spalts 62 sind bei entsprechendem Schwenkwinkel a nach der oberen und unteren Seite Abdichthauben 36 ausgebildet, welche den Befestigungssteg 16 aufnehmen.

Die in Fig. 7 und 8 dargestellte Vorrichtung 10 zur Regelung des Luftstroms A in einem Lüftungsrohr 12 mit einem grösseren (Fig. 7) und einem kleineren Durchmesser (Fig. 8) hat einen Befestigungssteg 16, welcher kürzer ist als der Durchmesser des Lüftungsrohrs 12. Er weist deshalb nur eine Halterung 20 mit einer Befestigungsachse 14 auf und kann in jeder beliebigen Drehstellung arretiert werden, was durch den Doppelpfeil 21 um die Befestigungsachse 14 angedeutet ist.

Der Winkel β des Befestigungsstegs 16 ist gegenüber der Längsachse L bzw. der Längsmittelebene bei nicht zylindrischen Lüftungsrohren 12 gegeben. Die Antriebsachse 28 muss exakt auf der Längsachse L bzw. auf halber Höhe ^{h}/₂ der Längsmittelebene liegen. Dies bedeutet, dass der Winkel β umso grösser ist, je grösser der Rohrdurchmesser ist. Die Luftklappe 32 ist in Schliessstellung, welche einen Winkel α von 90° gegenüber der Längsachse L bzw. der Rohrwandung 18 bedeutet.

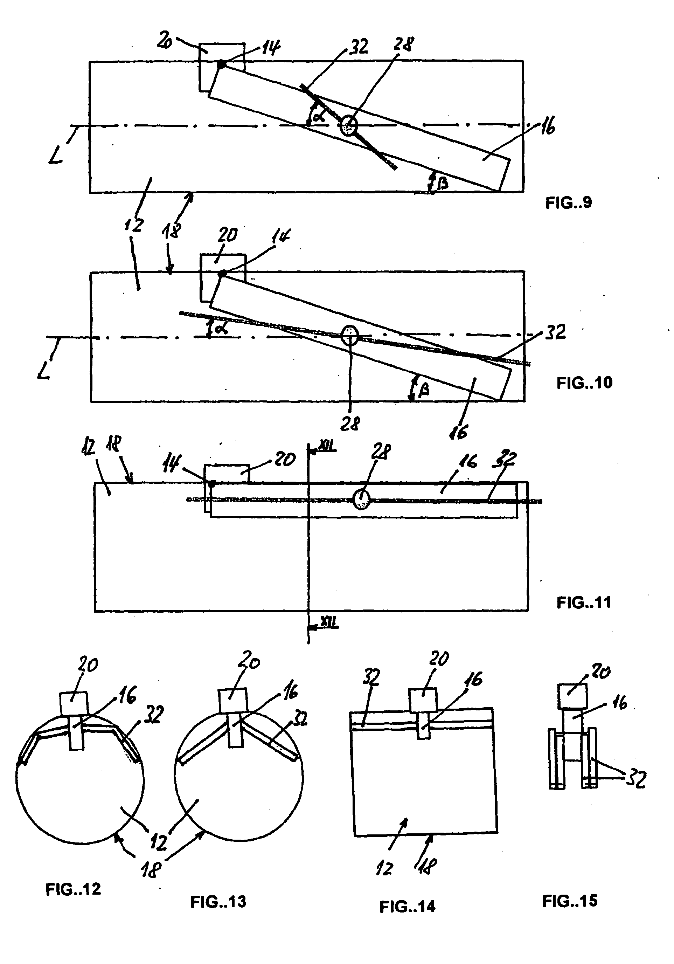

Fig. 9 und 10 zeigen Lüftungsrohre 12 mit kleinem Durchmesser, der Befestigungssteg 16 hat dementsprechend einen kleinen Winkel β gegenüber der Längsachse L bzw. der Rohrwandung 18. Der einzige Unterschied besteht darin, dass Fig. 9 eine kreisförmige Luftklappe 32 hat, Fig. 10 eine elliptische. Entsprechend ist der Winkel β in Schliessstellung gemäss Fig. 9 90°, von Fig. 10 etwa 25°.

In Fig. 11 ist der Befestigungssteg 16 mit der Antriebsachse 28 und der Luftklappe 32 hochgeklappt, beide Winkel α und β sind gleich 0. Die Rohrinspektion oder Rohrreinigung kann nun problemlos erfolgen, der notwendige Freiraum ist geschaffen. Das in Fig. 11 dargestellte Lüftungsrohr 12 ist quadratisch oder rechteckig ausgebildet, wie dies in Fig. 14 im Querschnitt dargestellt wird.

Bei runden oder elliptischen Rohrquerschnitten gemäss Fig. 12 und 13 ist ein Hochklappen des Befestigungsstegs 16 nur möglich, wenn die blattförmigen Luftklappen 32 umgelegt bzw. abgeklappt werden können. Diesbezüglich sind technische Lösungen aus anderen Fachgebieten bekannt.

Fig. 15 zeigt eine Einheit, bestehend aus Halterung 20, Befestigungssteg 16 und vollständig umgelegten blattförmigen Luftklappen 32, was ein niedriges Transportvolumen ergibt.

## Patentansprüche

1. Vorrichtung (10) zur Regelung des Luftstroms (A) in einem Lüftungsrohr (12) mit einer oder mehreren synchron betätigbaren Luftklappen (32), welche in Schliessstellung den Luftstrom (A) im Rohr unterbinden,
**dadurch gekennzeichnet, dass**
im Lüftungsrohr (12), auf einer längslaufenden Symmetrieebene, ein Befestigungssteg (16) mit einem Drehlager (30) für die Antriebsachse (28) der Luftklappe/n (32) und Mitteln (50, 52) für die Kraft- und/oder Drehmomentübertragung auf die mit der/den Luftklappe/n (32) verbundene Antriebsachse (28) angeordnet ist, wobei der gleiche mit verschiedenen Luftklappen (32) bestückbare Befestigungssteg (16) für querschnittlich verschieden dimensionierte Lüftungsrohre (12) einsetzbar ist.

2. Vorrichtung (10) nach Anspruch 1, **dadurch gekennzeichnet, dass** der Befestigungssteg (16) in einem Winkel (β) von vorzugsweise 15 bis 90° bezüglich der Längsachse (L) bzw. der Rohrwandung (18) des Lüftungsrohrs (12) verläuft.

3. Vorrichtung (10) nach Anspruch 1 oder 2, **dadurch gekennzeichnet, dass** der Befestigungssteg (16) einends lösbar und in der Symmetrieebene schwenkbar an der Rohrwandung (18) befestigt ist.

4. Vorrichtung (10) nach einem der Ansprüche 1 bis 3, **dadurch gekennzeichnet, dass** sich der Befestigungssteg (16) über den ganzen Rohrquerschnitt erstreckt und am freien Ende mit einer Auflagefläche (44) auf der Rohrwandung (18) aufliegt.

5. Vorrichtung (10) nach Anspruch 4, **dadurch gekennzeichnet, dass** der Befestigungssteg (16) beidends an der Rohrwandung (18) lösbar befestigt ist.

6. Vorrichtung (10) nach einem der Ansprüche 1 bis 5, **dadurch gekennzeichnet, dass** der Stellantrieb (48) der Antriebsachse/n (28) wenigstens teilweise in den Befestigungssteg (16), vorzugsweise ein programmgesteuerter Elektromotor, integriert ist.

7. Vorrichtung (10) nach einem der Ansprüche 1 bis 6, **dadurch gekennzeichnet, dass** der Stellantrieb (48) über ein Untersetzungsgetriebe (52) auf die Antriebsachse/n (28) einwirkt.

8. Vorrichtung (10) nach einem der Ansprüche 1 bis 7, **dadurch gekennzeichnet, dass** die Steuerelektronik (26) wenigstens teilweise in den Befestigungssteg (16) eingebaut ist.

9. Vorrichtung (10) nach einem der Ansprüche 1 bis 8, **dadurch gekennzeichnet, dass** der Befestigungssteg (16) stromlinienförmig ausgebildet ist, vorzugsweise rund oder prismatisch mit abgerundeten Kanten.

10. Vorrichtung (10) nach einem der Ansprüche 1 bis 9, **dadurch gekennzeichnet, dass** beidseits des Befestigungsstegs (16) für die Luftklappe/n (32) je ein Befestigungspunkt an der Antriebsachse (28) angebracht ist.

11. Vorrichtung (10) nach einem der Ansprüche 1 bis 10, **dadurch gekennzeichnet, dass** die Antriebsachse (28) der Luftklappe/n (32) auf beiden Stirnseiten bis zur Rohrwandung (18) verlängert ist und eine seitliche Stützfunktion erfüllt.

12. Vorrichtung (10) nach einem der Ansprüche 1 bis 11, **dadurch gekennzeichnet, dass** die Luftklappe (32) eine im Wesentlichen kreisförmige Blattform hat, welche einen diagonalen Spalt (62) für die Aufnahme des Befestigungsstegs (16) hat, im Lüftungsrohr (12) gegenüber der Längsachse (L) einen weiteren Winkel (α) von 0 bis 90° einnehmen kann.

13. Vorrichtung (10) nach einem der Ansprüche 1 bis 12, **dadurch gekennzeichnet, dass** die Luftklappe (32) mit zwei diagonal gegenüberliegenden Abdichthauben (36) ausgerüstet ist.

14. Vorrichtung (10) nach einem der Ansprüche 1 bis 11, **dadurch gekennzeichnet, dass** eine lediglich leicht elliptische Luftklappe (32) einstückig ausgebildet ist und ein nicht durchgehender Spalt (62) auf einem längeren, senkrecht zur Antriebsachse (28) verlaufenden Durchmesser der lediglich leicht elliptischen Luftklappe (32) ausgebildet ist.

15. Vorrichtung (10) nach einem der Ansprüche 1 bis 14, **dadurch gekennzeichnet, dass** zur Anzeige einer Klappenstellung ein Monitor (24) oder eine LED-Lampe angeordnet ist, wobei ein Kabel (22) vom Monitor (24) oder von der LED-Lampe in das Innere des Befestigungsstegs (16) führt, welcher die nicht im Monitor (24) angeordnete Elektronik (26) enthält.

16. Vorrichtung (10) nach einem der Ansprüche 1 bis 15, **dadurch gekennzeichnet, dass** an beiden Stirnseiten des Befestigungsstegs (16) je eine Messzelle (54, 56) zur Differenzdruckmessung im Lüftungsrohr (12) angeordnet ist.

## Claims

1. Device (10) for controlling the air flow (A) in a ventilating pipe (12) with one or more air flaps (32) which can be actuated synchronously and which prevent the air flow (A) in the pipe in the closed position, **characterised in that** a fastening web (16) with a pivot bearing (30) for the drive axle (28) of the air flap(s) (32) and means (50, 52) for transmitting force and/or torque to the drive axle (28) connected to the air flap(s) (32) are arranged in the ventilating pipe (12), on a longitudinally extending plane of symmetry, wherein the same fastening web (16) fitted with various air flaps (32) can be used for cross-sectionally differently dimensioned ventilating pipes (12).

2. Device (10) according to claim 1, **characterised in that** the fastening web (16) extends at an angle (β) of preferably 15 to 90° with respect to the longitudinal axis (L) or the pipe wall (18) of the ventilating pipe (12).

3. Device (10) according to claim 1 or 2, **characterised in that** the fastening web (16) is fastened so as to be detachable at one end and so as to be pivotable in the plane of symmetry on the pipe wall (18).

4. Device (10) according to any one of claims 1 to 3, **characterised in that** the fastening web (16) extends over the entire pipe cross-section and rests at the free end with a support face (44) on the pipe wall (18).

5. Device (10) according to claim 4, **characterised in that** the fastening web (16) is detachably fastened at both ends to the pipe wall (18).

6. Device (10) according to any one of claims 1 to 5, **characterised in that** the actuator (48) of the drive axle(s) (28) is integrated at least partially into the fastening web (16), preferably a program-controlled electric motor.

7. Device (10) according to any one of claims 1 to 6, **characterised in that** the actuator (48) acts on the drive axle(s) (28) by way of a reducing gear (52).

8. Device (10) according to any one of claims 1 to 7, **characterised in that** the control electronics (26) are installed at least partially in the fastening web (16).

9. Device (10) according to any one of claims 1 to 8, **characterised in that** the fastening web (16) is streamlined, preferably round or prismatic with rounded edges.

10. Device (10) according to any one of claims 1 to 9, **characterised in that** a fastening point is provided, in each case, on the drive axle (28) on either side of the fastening web (16) for the air flap(s) (32).

11. Device (10) according to any one of claims 1 to 10, **characterised in that** the drive axle (28) of the air flap(s) (32) are lengthened on both end faces up to the pipe wall (18) and therefore fulfill a lateral support function.

12. Device (10) according to any one of claims 1 to 11, **characterised in that** the air flap (32) has essentially a circular blade-shaped form, which has a diagonal gap (62) for receiving the fastening web (16), can adopt a further angle (α) of 0° to 90° with respect to the longitudinal axis (L) of the ventilating pipe (12).

13. Device (10) according to any one of claims 1 to 12, **characterised in that** the air flap (32) has two diagonally opposing sealing hoods (36).

14. Device (10) according to any one of claims 1 to 11, **characterised in that** a solely slightly elliptical air flap (32) is configured in one piece and a non-continuous gap (62) on a longer, perpendicularly to the drive axle (28) arranged diameter of the solely slightly elliptical air flap (32) is formed.

15. Device (10) according to any one of claims 1 to 14, **characterised in that** a monitor (24) or a LED-lamp is arranged to visually display the flap position, whereas a cable (22) extends from the monitor (24) or from the LED-lamp into a inner part of the fastening web (16), which contains electronics (26) that is not arranged in the monitor (24).

16. Device (10) according to any one of claims 1 to 15, **characterised in that** on both front ends of the fastening web (16) measuring cells (54, 56) for measuring the differential pressure (p1, p2) are arranged on.

## Revendications

1. Dispositif (10) de régulation d'une circulation d'air (A) dans un conduit d'aération (12), comprenant un ou plusieurs volets d'aération (32) manoeuvrables de façon synchrone qui empêchent en position fermée la circulation d'air (A) dans le conduit,
**caractérisé en ce que**
une barrette de fixation (16), comportant un palier de rotation (30) pour l'axe d'actionnement (28) du ou des volet(s) d'aération (32) et des moyens (50, 52) de transmission de force et/ou de couple à l'axe d'actionnement (28) connecté au(x) volet(s) (32) d'aération, est disposée dans le conduit d'aération (12) dans un plan de symétrie longitudinal du système, ladite barrette de fixation (16) pouvant être équipée de divers volets d'aération (32) pour des conduits d'aération (12) de diverses dimensions en section transversale.

2. Dispositif (10) selon la revendication 1, **caractérisé en ce que** l'angle (β) entre la barrette de fixation (16) et l'axe longitudinal (L) ou la paroi (18) de conduit du conduit d'aération (12) est de préférence de 15 à 90°.

3. Dispositif (10) selon la revendication 1 ou 2, **caractérisé en ce que** la barrette de fixation (16) est fixée de façon détachable à l'une de ses extrémités et peut pivoter sur la paroi (18) de conduit dans le plan de symétrie.

4. Dispositif (10) selon l'une des revendications 1 à 3, **caractérisé en ce que** la barrette de fixation (16) s'étend sur toute la section transversale du conduit et repose à son extrémité libre, par une surface d'appui (44), sur la paroi (18) de conduit.

5. Dispositif (10) selon la revendication 4, **caractérisé en ce que** la barrette de fixation (16) est fixée de façon détachable à ses deux extrémités à la paroi (18) de conduit.

6. Dispositif (10) selon l'une quelconque des revendications précédentes, **caractérisé en ce que** l'actionnement (48) de manoeuvre de l'axe ou des axes d'actionnement (28), de préférence un moteur électrique à commande programmée, est intégré au moins partiellement dans la barrette de fixation (16).

7. Dispositif (10) selon l'une quelconque des revendications précédentes, **caractérisé en ce que** l'actionnement (48) de manoeuvre agit sur l'axe ou les axes d'actionnement (28) au moyen d'un démultiplicateur (52).

8. Dispositif (10) selon l'une quelconque des revendications précédentes, **caractérisé en ce que** l'électronique de commande (26) est au moins partiellement incorporée dans la barrette de fixation (16).

9. Dispositif (10) selon l'une quelconque des revendications précédentes, **caractérisé en ce que** la structure de la barrette de fixation (16) est de forme aérodynamique, de préférence ronde ou prismatique à arêtes arrondies.

10. Dispositif (10) selon l'une quelconque des revendications précédentes, **caractérisé en ce qu'**un point de fixation est formé sur l'axe de manoeuvre (28), sur chacun des côtés de la barrette de fixation (16), pour le ou les volet(s) d'aération (32).

11. Dispositif (10) selon l'une quelconque des revendications précédentes, **caractérisé en ce que** les deux fronts de l'axe d'actionnement (28) du volet d'aération (32) sont prolongé jusqu'à la paroi (18) de conduit, et remplit une fonction de support latéral.

12. Dispositif (10), selon l'une quelconque des revendications précédentes, **caractérisé en ce que** le volet d'air lamellaire (32) a essentiellement une forme circulaire foliaire, qui a une fente (62) diagonal pour peut prendre la barrette de fixation (16), peut prendre un autre angle (α) de 0° jusque 90° par rapport à l'axe longitudinal (L) du conduit d'aération (12).

13. Dispositif (10) selon l'une quelconque des revendications précédentes, **caractérisé en ce que** des calottes d'étanchéité (36) sont disposées diagonalement opposé dans le volet d'air lamellaire (32).

14. Dispositif (10) selon l'une quelconque des revendications 1 jusque 11, **caractérisé en ce que** le volet d'air lamellaire (32) est seulement légèrement elliptique et une fente de bout en bout (62) non-constante est arrangé sur un diamètre allonger et s'égarer à angle droit de l'axe d'actionnement (28) du volet d'air lamellaire (32) seulement légèrement elliptique.

15. Dispositif (10) selon l'une quelconque des revendications précédentes, **caractérisé en ce qu'**un moniteur (24) ou une lampe LED sont arrangés pour indiquer visuellement la position du ou des volets, et un câble (22) amène du moniteur (24) ou de la lampe LED dons l'intérieur de la barrette de fixation (16), qui comporte la électronique (26) non-arrange dans le moniteur (24).

16. Dispositif (10) selon l'une quelconque des revendications précédentes, **caractérisé en ce que** sur tous les deux fronts la barrette de fixation (16) sont disposées des cellules de mesure (54, 56) pour mesurer la pression différentielle (p1, p2).
